# DEMANDE DE BREVET EUROPEEN

(11) **EP 3 147 018 A1**
(43) Date de publication de la demande: **29.03.2017**
(21) Numéro de dépôt: 16190537.7
(22) Date de dépôt: 26.09.2016
(51) Int. Cl.: B01D 41/04, F01N 3/02, F01N 3/023

(54) **PROCÉDÉ ET SYSTÈME DE NETTOYAGE D'UN FILTRE À PARTICULES**

(30) Priorité: 25.09.2015 FR 1559037
(71) Demandeur: Renault S.A.S., 92100 Boulogne-Billancourt (FR)
(72) Inventeur: Trenoras, Thibault, 94210 La Varenne-Saint-Hilaire (FR); Chevaleyre, Frédéric, 94120 Fontenay sous Bois (FR)

(57) **Abrégé**

L'invention concerne un procédé et un système de nettoyage d'un filtre à particules (2) d'une ligne d'échappement d'un moteur thermique d'un véhicule automobile, le procédé comprenant une étape de mise en circulation (28) d'un flux de fluides à une température (T1), notamment à une haute température, au travers du filtre à particules (2), le flux de fluide comprenant des particules abrasives.

## Description

La présente invention concerne un procédé de nettoyage d'un filtre à particules d'une ligne d'échappement d'un véhicule automobile et un système pour la mise en oeuvre de ce procédé.

Les véhicules automobiles équipés d'un moteur à combustion portent une ligne d'échappement en sortie du moteur. Cette ligne a pour fonction de réduire les nuisances sonores dues à l'évacuation des gaz d'échappement et, avantageusement, à assurer la dépollution des gaz d'échappement notamment en comportant un filtre à particules.

Ce filtre à particules est constitué de manière générale d'un substrat poreux dans lequel sont délimités des canaux parallèles adjacents obturés alternativement d'un côté et de l'autre. Ce filtre à particules présente des faces amont et aval en considérant le sens d'écoulement normal des gaz dans la ligne d'échappement.

Après une utilisation prolongée du véhicule, le filtre à particules et en particulier la face amont, est généralement chargé de particules de suie présentes dans les gaz d'échappement. Dans l'optique de garantir un débit minimum de gaz dans la ligne d'échappement et d'éviter ainsi tout risque d'étouffement du moteur de ce véhicule, les particules de suie stockées dans le filtre à particules sont régulièrement évacuées notamment par la mise en oeuvre de processus dit de régénération. Ces processus de régénération consistent à augmenter la température des gaz d'échappement à l'entrée du filtre à particules afin de provoquer une réaction de pyrolyse des particules de suie pour qu'elles puissent être évacuées.

Toutefois, ces processus de régénération du filtre à particules ne peuvent être mis en oeuvre que lors d'un mode de conduite particulière du véhicule par l'utilisateur, plus précisément lors de phases de roulage où le véhicule circule à plus de de 40 km/h pendant une durée de 20 à 30 minutes. Si les régénérations ne sont pas assez fréquentes ou pas assez efficaces, le filtre particules peut se colmater complètement, et il devient alors nécessaire de le remplacer par un filtre en bon état sur la ligne d'échappement du véhicule.

La présente invention vise à pallier ces inconvénients liés aux systèmes et procédés de nettoyage des filtres à particules de l'art antérieur. Plus précisément, elle propose un moyen de rénover un filtre à particules, en dehors du véhicule, pour qu'un filtre colmaté sur véhicule, puis démonté dudit véhicule, ne soit pas jeté mais puisse être réutilisé, par exemple sur le même véhicule.

Dans ce dessein, l'invention concerne un procédé de nettoyage d'un filtre à particules d'une ligne d'échappement d'un moteur thermique d'un véhicule automobile comprenant une étape de mise en circulation d'un flux de fluides à une température, notamment à une haute température, au travers du filtre à particules, le flux de fluide comprenant des particules abrasives.

Dans d'autres modes de réalisation :
- l'étape de mise en circulation comprend une première étape de pyrolyse de particules de suie comprises dans le filtre à particules comportant une étape de configuration de caractéristiques d'un premier fluide du flux de fluides relatives à un premier débit et à la température ;
- l'étape de mise en circulation comprend une deuxième étape de pyrolyse de particules de suie comprises dans le filtre à particules et une étape de réalisation du flux de fluides ;
- la deuxième étape de pyrolyse comprend une étape de configuration d'une caractéristique du premier fluide du flux de fluides relative à un deuxième débit ;
- l'étape de réalisation du flux de fluides comprend une étape d'obtention d'un deuxième fluide et une étape d'injection du deuxième fluide dans le premier fluide ;
- l'étape d'obtention du deuxième fluide comprend prévoit une réalisation d'un mélange de composants choisis parmi les composants suivants : un fluide liquide, au moins un additif et des particules abrasives ;
- le procédé comprend :
   - une étape d'évacuation des particules de suie, et/ou
   - une étape d'extraction des particules abrasives comprises dans le flux de fluides, et/ou
   - une étape de refroidissement du filtre à particules.
- un premier débit est inférieur à un deuxième débit, et
- le procédé comprend une étape d'agencement du filtre à particule dans un dispositif de support d'un système de nettoyage du filtre à particules.

L'invention concerne également un système de nettoyage d'un filtre à particules d'une ligne d'échappement d'un véhicule automobile mettant en oeuvre un tel procédé de nettoyage comprenant un dispositif de support dans lequel est agencé ledit filtre à particules ainsi que :
- une unité de traitement ;
- un dispositif de soufflerie ;
- un dispositif de chauffage, et
- un dispositif d'injection,

ladite unité de traitement étant reliée audits dispositifs de soufflerie, de chauffage et d'injection de manière à réaliser une mise en circulation dans un circuit du système d'un flux de fluides au travers du filtre à particules, le flux ayant une haute température et comprenant des particules abrasives.

Avantageusement, le dispositif de soufflerie comprend un élément de régulation d'un débit du premier fluide dans le circuit contrôlé par l'unité de traitement.

En particulier, le dispositif de chauffage comprend un élément de chauffage contrôlé par l'unité de traitement.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une vue schématique du système de nettoyage d'un filtre à particules d'une ligne d'échappement d'un véhicule automobile selon le mode de réalisation de l'invention, et
- la figure 2 représente schématiquement un procédé de nettoyage d'un filtre à particules d'une ligne d'échappement d'un véhicule automobile selon le mode de réalisation de l'invention.

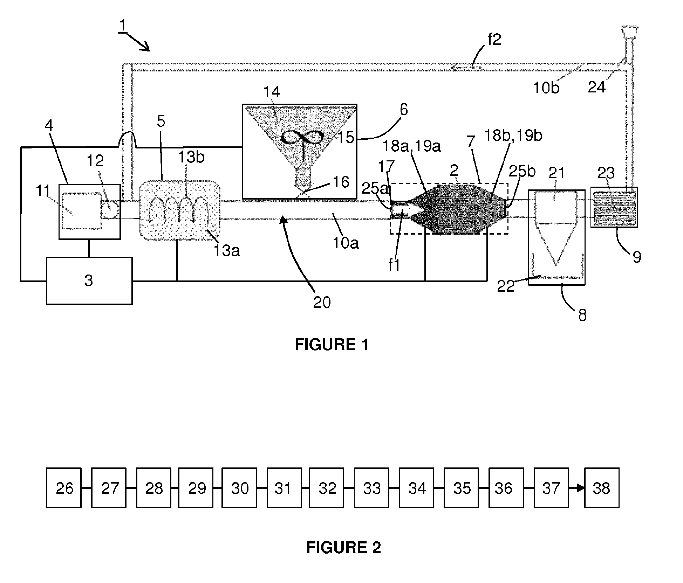

Dans un mode de réalisation de l'invention illustré sur la figure 1, le système 1 de nettoyage d'un filtre à particules 2 d'une ligne d'échappement d'un véhicule automobile comprend un circuit 20 comportant une première partie 10a et une deuxième partie 10b. Ce système 1 de nettoyage comprend également différentes composantes agencées au niveau du circuit 20. Ces composantes sont de manière non limitative et non exhaustive :
- une unité de traitement 3 ;
- un dispositif de soufflerie 4 ;
- un dispositif de chauffage 5 ;
- un dispositif d'injection 6 d'un fluide dans le circuit 20 du système 1 de nettoyage ;
- un dispositif de support 7 du filtre à particules 2 ;
- un dispositif d'extraction 8 de particules abrasives ;
- un dispositif de récupération 9 de particules de suie ;
- des premiers capteurs 18a, 19a de pression et de température ;
- des deuxièmes capteurs 18b, 19b de pression et de température,
   et
- une soupape de sécurité 24.

Dans ce système 1 de nettoyage, l'unité de traitement 3 par exemple un ordinateur, comprend des éléments matériels et/ou logiciels. Les éléments matériels et/ou logiciels de l'unité de traitement 3 comportent plus précisément au moins un microprocesseur coopérant avec des éléments de mémoire. Cette unité de traitement est apte à exécuter des instructions de code de programme pour la mise en oeuvre d'un programme d'ordinateur pour la réalisation de tout ou partie des étapes du procédé de nettoyage du filtre à particules 2 qui est décrit par la suite.

Cette unité de traitement 2 est reliée de préférence aux composants suivants du système de nettoyage :
- le dispositif de soufflerie 4 ;
- le dispositif de chauffage 5 ;
- le dispositif d'injection 6 ;
- les premiers capteurs 18a, 19a de pression et de température, et
- les deuxièmes capteurs 18b, 19b de pression et de température.

Dans ce système 1, le dispositif de soufflerie 4 est agencé au niveau d'une première extrémité de la première partie 10a du circuit 20, et le dispositif de récupération 9 est situé au niveau de la deuxième extrémité de cette première partie 10a du circuit 20. Le dispositif de récupération 9 est également situé au niveau d'une deuxième extrémité de la deuxième partie 10b du circuit 20. Cette deuxième partie 10b comprend également une première extrémité qui est reliée à la première partie 10a du conduit 20 entre le dispositif de soufflerie 4 et le dispositif de chauffage 5.

Ce dispositif de soufflerie 4 comprend une entrée d'admission d'un premier fluide et une sortie par laquelle ce premier fluide est expulsé du dispositif de soufflerie 4 pour être mis en circulation dans le circuit 20 du système 1 de nettoyage sous l'effet d'une surpression engendrée par une turbine 11 comprise dans ce dispositif de soufflerie 4. Ce dispositif de soufflerie 4 comprend également au niveau de sa sortie un élément de régulation 12 du débit du premier fluide dans le circuit 20 du système 1.

Dans ce système 1, le dispositif de chauffage 5 comprend une enceinte 13a qui est susceptible d'être traversée par le premier fluide. Il comprend également un élément chauffage 13b permettant de réaliser un apport calorifique à ce premier fluide circulant dans cette première partie 10a du circuit 20, afin que ce dernier atteigne une température T1.

Le dispositif d'injection 6 de ce système 1 comprend une cuve 14 sous pression dans laquelle est situé un agitateur 15 qui est apte à maintenir le deuxième fluide en suspension. Ce dispositif d'injection 6 comprend également un élément d'injection 16 d'un deuxième fluide dans la première partie 10a du conduit 20 contrôlé par l'unité de traitement 3.

Dans ce système 1, le filtre à particules 2 est disposé dans le dispositif de support 7. Ce dispositif de support 7 est relié au conduit 20 à partir d'un élément de fixation modulable 17.

Ce filtre à particules 2 est de préférence constitué d'un substrat poreux dans lequel sont délimités des canaux parallèles adjacents obturés alternativement d'un côté et de l'autre. Ce filtre à particules 2 présente des faces amont et aval en considérant le sens d'écoulement normal des gaz dans la ligne d'échappement. Dans ce filtre à particules 2, ces faces sont opposées l'une à l'autre. La face amont désigne la surface d'extrémité amont du filtre et la surface des canaux débouchant sur cette surface ou plus généralement toute surface du filtre susceptible de retenir des particules de suie.

Dans ce contexte, ce filtre à particules 2 est démonté de la ligne d'échappement du véhicule pour être agencé dans le système 1 et en particulier dans le dispositif de support 7 afin d'y être nettoyé. Ce dispositif de support 7 comprend un logement dans lequel le filtre à particules 2 est disposé et des ouvertures d'entrée 25a et de sortie 25b pour le passage du flux de fluides. La face amont du filtre à particules 2 peut être située indifféremment en regard de l'ouverture d'entrée 25a ou de l'ouverture de sortie 25b.

Dans ce système 1, le dispositif d'extraction 8 de particules abrasives comprend une chambre de détente 21 de type filtre cyclonique et un élément de réception 22 des particules abrasives extraites, et le dispositif de récupération 9 de particules de suie comprend un élément de filtrage 23 apte à piéger les particules de suie.

Par « particule abrasive », on entend dans tout le présent document une particule ayant une dureté supérieure à 8 suivant l'échelle de Mohs et de préférence inférieure à 10 selon la même échelle, de dimension comprise entre 1000 et 4000 nm, possédant une température de fusion supérieure à 1500°C, et de préférence inerte chimiquement.

Ainsi que nous l'avons évoqué, le système 1 comprend également des premiers capteurs de pression et de température 18a, 19a, agencés en dans la première partie 10a du circuit en entrée du filtre à particules 2 et des deuxièmes capteurs de pression et de température 18b, 19b, situés dans la première partie 10a du circuit en sortie du filtre à particules 2. Ces premier et deuxième capteurs 18a, 18b, 19a, 19b sont de préférence agencés dans le dispositif de support 7 du filtre à particules 2.

On notera que la deuxième partie 10b du circuit 20 comprend la soupape de sécurité 24 qui permet d'évacuer le flux de fluides lorsque cela est nécessaire pour un bon fonctionnement du système 1.

Ce système 1 est apte à mettre en oeuvre un procédé de nettoyage d'un filtre à particule d'une ligne d'échappement d'un véhicule automobile visible sur la figure 2.

Ce procédé comprend une étape d'agencement 26 du filtre à particules 2 dans le dispositif de support 7 du système 1 prévu à cet effet.. Dans ces conditions, le filtre à particules 2 est situé entre les premiers capteurs de pression et de température 18a, 19a et les deuxièmes capteurs de pression et de température 18b, 19b.

Une fois agencé dans le dispositif de support 7 du système 1, le procédé prévoit une étape de démarrage 27 du système 1 lors de laquelle l'unité de traitement 3 commande la mise en marche du dispositif de soufflerie 4, du dispositif de chauffage 5 et du dispositif d'injection 6.

Lors de cette étape de démarrage 27, le dispositif de soufflerie 4 est apte à mettre en circulation dans le système 1 et en particulier dans le conduit 20 de ce dernier, un premier fluide de manière à générer un flux de fluides de nettoyage comprenant ce premier fluide et un deuxième fluide qui est décrit par la suite. Ce premier fluide est de préférence gazeux et peut par exemple être un gaz comme l'air ou encore de l'air enrichi en hydrogène. On notera que lors cette étape de démarrage 27 du système 1, le premier fluide pénètre dans le système 1 au niveau de l'entrée du dispositif de soufflerie 4.

Ce procédé comprend ensuite une étape de mise en circulation 28 du flux de fluides de nettoyage, appelé par la suite flux de fluides, au travers du filtre à particules 2. Ce flux de fluides comprend un liquide chargé ou non de particules abrasives, et est configuré à une température T1, en particulier à une haute température, qui est définie selon une température de référence. Cette température de référence est donc une haute température qui est comprise entre 640 et 660°C, et qui est de préférence sensiblement égale à 650°C. Ce flux de fluides circule dans le conduit 20 du système 1 selon un sens d'écoulement défini par le sens des flèches f1, f2 visibles sur la figure 1.

Cette étape de mise en circulation 28 comprend une première étape de pyrolyse 29 des particules de suie comprises dans le filtre à particules 2. La première étape de pyrolyse 29 comporte une étape de configuration 30 des caractéristiques du premier fluide du flux de fluides relatives à un premier débit D1 et à la température T1.

Lors de cette première étape de pyrolyse 29, l'unité de traitement 3 en étant connectée à l'élément de chauffage 13a du dispositif de chauffage 5 et aux premier et deuxième capteurs de température 19a, 19b, réalise une régulation de la température T1 du premier fluide de sorte que cette température T1 est maintenue à la température de référence Tr archivée dans les éléments de mémoires de l'unité de traitement 3. Autrement dit la température T1 est sensiblement égale à la température de référence. L'unité de traitement 3 régule également le premier débit D1 de ce premier fluide en pilotant l'élément de régulation 12 agencé au niveau de la sortie du dispositif de soufflerie 4. Le pilotage de l'élément de régulation 12 est effectué en fonction notamment du résultat d'un traitement de première données provenant des premier et deuxième capteurs de pression 18a, 18b agencés au niveau du filtre à particules 2 et de deuxième données archivées dans les éléments de mémoire de l'unité de traitement 3 qui définissent un premier débit de référence. Dans ces conditions, lors de cette première étape de pyrolyse 29, l'unité de traitement 3 réalise de manière régulière voire continue une régulation du premier débit D1 du premier fluide, de sorte que ce premier débit D1 est maintenu à ce premier débit de référence. Autrement dit, le premier débit D1 est sensiblement égal au premier débit de référence. Le premier débit de référence est compris entre environ de 1700 et 1900 l/min, et il est de préférence sensiblement égal à 1800 l/min.

Cette première étape de pyrolyse 29 est réalisée durant une première période P1 qui est comprise entre environ 300 à 600 secondes selon la taille du filtre à particules à rénover.

Dans ce procédé, l'étape de mise en circulation 28 comprend par la suite une deuxième étape de pyrolyse 31 des particules de suie comprises dans le filtre à particules 2 et une étape de réalisation 32 du flux de fluides qui est susceptible de traverser le filtre à particules 2.

Lors de la mise en oeuvre de la deuxième étape de pyrolyse 31 et de l'étape de réalisation 32, le premier fluide est maintenu à la température T1 grâce notamment à un apport calorifique constant résultant de la régulation de cette température T1 par l'unité de traitement 3 qui est connectée au dispositif de chauffage 5. On notera d'ailleurs que cette température T1 est régulée durant la mise en oeuvre de l'étape de mise en circulation 28.

De manière sensiblement similaire à la première étape de pyrolyse 29, la deuxième étape de pyrolyse 31 comprend une étape de configuration 33 d'une caractéristique du premier fluide du flux de fluides relative à un deuxième débit D2. Plus précisément, l'unité de traitement 3 paramètre le débit du premier fluide afin qu'il soit égal à ce deuxième débit D2 et ce en pilotant l'élément de régulation 12 du dispositif de soufflerie. Le pilotage de l'élément de régulation 12 est effectué en fonction notamment du résultat d'un traitement de première données provenant des premier et deuxième capteurs de pression 18a, 18b agencés au niveau du filtre à particules 2 et de deuxième données archivées dans les éléments de mémoire de l'unité de traitement 3 qui définissent un deuxième débit de référence.

Durant cette deuxième étape de pyrolyse 31, l'unité de traitement 3 réalise de manière régulière voire continue une régulation du deuxième débit D2 de ce premier fluide en fonction du deuxième débit de référence. Le deuxième débit de référence est compris entre environ 2000 et 4000 l/min, et il est de préférence sensiblement égal à 3000 l/min. On notera que dans ce procédé, lors de la deuxième étape de pyrolyse 31, le débit du premier fluide est augmenté en passant du premier débit D1 au deuxième débit D2. Effectivement, dans ce mode de réalisation, le premier débit D1 est sensiblement inférieur au deuxième débit D2.

Avantageusement, de telles première et deuxième étapes de pyrolyse 29, 31 permettent de provoquer une oxydation des particules de suie.

Lors de cette deuxième étape de pyrolyse 31, l'étape de réalisation 32 du flux de fluides comprend une étape d'obtention 34 d'un deuxième fluide qui est de préférence liquide. Cette étape d'obtention 34 du deuxième fluide est apte à mettre en oeuvre une réalisation d'un mélange de différents composants de manière à obtenir une solution liquide abrasive correspondant au deuxième fluide. Ces composants correspondent de manière non limitative et non exhaustive à un fluide liquide, à au moins un additif et à des particules abrasives. Lors de la réalisation du mélange, ces composants sont introduits dans la cuve 14 sous pression du dispositif d'injection 6 pour y être mélangés de manière homogène par un agitateur 15. Dans une variante, on notera que cette étape d'obtention 34 peut être effectuée durant la réalisation de la première étape de pyrolyse 28.

Le fluide liquide peut être par exemple de l'eau et représente une proportion L1 de la solution comprise entre environ 85 et 100 %, et de préférence sensiblement égale à 93 %. Ce fluide liquide permet de participer au transport dudit au moins un additif et des particules abrasives dans le système 1 et notamment dans le conduit 20 de ce système 1.

Ledit au moins un additif peut être un oxyde plus particulièrement un oxyde de cérium comme la cérine CeO2, qui représente une proportion L2 de la solution comprise entre 0 et 10 %, et de préférence sensiblement égale à 5 %. L'utilisation d'un tel additif permet de contribuer à améliorer l'efficacité de la deuxième étape de pyrolyse 31 en assurant le maintien de l'action de pyrolyse au niveau du filtre à particules 2 pour des températures comprises entre 450°C et 550°C.

Les particules abrasives peuvent comprendre du carbure de bore (B4c) sous la forme d'une poudre ayant de préférence une granulométrie comprise entre environ 1000 et 4000 nm, et de préférence sensiblement égale à de 3000 nm. Ces particules abrasives représentent une proportion L3 de la solution comprise entre environ 0 et 3 %, et de préférence une proportion sensiblement égale à 2 %. Ce carbure de bore peut avoir une dureté de 9,5 suivant l'échelle de Mohs et une température de fusion de 2600°C. On notera que la durée de vie moyenne de ces particules abrasives comprenant du carbure de bore, est d'environ 700 heures, ce qui permet de pouvoir aisément réaliser leur recyclage. De plus, Le carbure de bore est un composé inerte chimiquement qui n'est pas toxique et qui peut être absorbé en petite quantité par l'organisme humain.

A titre d'exemple, dans ce mode de réalisation, la solution correspondant au deuxième fluide peut être d'environ 4 litres. Dans ces conditions, cette solution peut comprendre environ 200 g de particules abrasives, 400 mL d'au moins un additif et 3500 mL de fluide liquide.

L'étape de réalisation 32 du flux de fluides comprend une étape d'injection 35 du deuxième fluide ainsi obtenu dans le premier fluide. Cette injection du deuxième fluide est réalisée dans le conduit 20 du système 1 où circule déjà le premier fluide. Dans le cadre de la mise en oeuvre de cette étape d'injection 35, l'unité de traitement 3 en étant relié au dispositif d'injection 6 pilote l'élément d'injection 16 de ce dernier afin de contrôler l'introduction du deuxième fluide dans le conduit 20 du système 1. Dans cette configuration, le deuxième fluide est alors ajouté/mélangé de manière homogène au premier fluide afin de former le flux de fluides qui est susceptible de traverser le filtre à particules 2. Cette unité de traitement 3 permet ainsi de réaliser une injection du deuxième fluide pendant une période P2 et selon une fréquence et une largeur de pulsation données. A titre d'exemple, la période P2 peut être comprise entre 55 et 65 secondes, et est de préférence de 60 secondes, et la fréquence d'environ 25Hz et la largeur de pulsation de 15ms. On notera qu'environ 0,12 à 0.14%, de préférence 0,13% de la solution et donc du deuxième fluide compris dans la cuve 14 du dispositif d'injection 6 est injecté dans le conduit 20 lors de la mise en oeuvre de cette étape d'injection 35. Dans ce mode de réalisation le volume moyen de solution injectée est d'environ 55mL.

On notera que la première période P1 durant laquelle la première étape de pyrolyse 29 est mise en oeuvre est supérieure à la période P2 relative à celle de l'étape d'injection 35.

Ainsi lors de la réalisation de l'étape de mise en circulation 28 du flux de fluides dans le conduit 20 du système 1, ce flux traverse alors le filtre à particules de sa face amont vers sa face aval en considérant le sens d'écoulement de ce flux illustré par la flèche f1 visible sur la figure 1. Ce flux de fluides réalise alors l'évacuation des particules de suie non brûlées notamment lors d'une phase antérieure de régénération, qui sont éliminées de ce filtre à particules 2, en particulier de la face amont qui est fortement chargée de telles particules de suie. Ainsi, le filtre à particules 2 est débarrassé de ces particules lors de la mise en oeuvre du procédé de nettoyage. Avantageusement, le système 1 et le procédé de nettoyage permettent d'éliminer le plus complètement possible les particules solides de suie contenues dans le filtre à particules 2.

Lors de cette étape de mise en circulation 28, la température T1 du premier fluide et donc du flux de fluides, provoque une réaction de pyrolyse qui permet de dégrader les particules de suie en radicaux plus petits. De plus, le flux de fluides en étant gazeux et en contenant notamment les particules abrasives est apte à entraîner le décollement des particules de suie du filtre de particules 2 afin de participer à leur évacuation. Les particules de suie ainsi évacuées sont comprises dans le flux de fluides qui quitte le filtre à particules 2 pour traverser ensuite le dispositif de récupération 9 de particules de suie après un passage dans le dispositif d'extraction 8 des particules abrasives.

Dans ce contexte le procédé prévoit alors une étape d'extraction 36 des particules abrasives comprises dans le flux de fluides. En effet, lorsque ce flux de fluides quitte le filtre à particules 2, il pénètre dans la chambre de détente 21 du dispositif d'extraction 8. Cette chambre 21 présente des caractéristiques qui contribuent à assurer une détente progressive et continue dudit flux de fluides permettant ainsi d'extraire tout ou partie des particules abrasives comprises dans ce flux. Les particules abrasives ainsi extraites sont ensuite récupérées dans un élément de réception 22 du dispositif d'extraction 8 en vue d'être recyclées. Ainsi, les particules abrasives extraites peuvent être réutilisées dans le dispositif d'injection 6.

Le procédé comprend ensuite une étape d'évacuation 37 des particules de suies. Lors de cette étape 37, les particules de suie comprises dans le flux de fluides provenant du filtre à particules 2 et plus précisément du dispositif d'extraction 8, sont alors récupérées par le dispositif de récupération 9 qui est traversé par ce flux. En effet, lorsque ce flux de fluides traverse le dispositif de récupération 9 et en particulier l'élément de filtrage 23 de ce dernier, les particules de suie qui sont comprises dans ce flux de fluides sont alors piégées dans cet élément de filtrage 23.

Ainsi le flux de fluide qui quitte le dispositif de récupération 9 est alors exsangue de particules de suie et de particules abrasives et peut être guidé par la deuxième partie 10b du circuit 20 vers la première partie 10a du circuit 20 en particulier avant le dispositif de chauffage 5 afin d'être réutilisé dans le cadre de ce procédé de nettoyage. Cette deuxième partie 10b du circuit 20 participe alors au recyclage du premier fluide à partir d'un flux encore chaud.

Par la suite le procédé comprend une étape de refroidissement 38 du filtre à particules 2. Cette étape 38 est réalisée durant une période P3 nécessaire pour que le filtre à particules 2 soit refroidi en vue d'être manipulé en toute sécurité. Lors de cette étape 38, l'unité de traitement 3 peut déclencher l'arrêt du dispositif de chauffage et augmenter éventuellement le débit du premier fluide, afin que le flux de fluides composé lors de la mise en oeuvre de cette étape 38 du premier fluide puisse provoquer le refroidissement du filtre à particules 2. Dans une variante, l'unité de traitement 3 peut déclencher les arrêts des dispositifs de chauffage et de soufflerie pour réaliser ce refroidissement du filtre 2. On notera que la période P3 de refroidissement est comprise entre 540 et 660 secondes, et de préférence 600 secondes. Cette période P3 peut être sensiblement similaire à la période P1.

Le procédé peut comprendre avant la réalisation de l'étape de mise en circulation 28 du flux de fluides au travers du filtre à particules 2, une étape de prétraitement de ce filtre à particules 2 à partir de procédés d'ultrasons et/ou de dissolution ou d'oxydation chimique.

Une telle invention a pour avantage d'améliorer l'efficacité, la facilité et la rapidité du nettoyage des filtres à particules 2 à partir d'un système 1 de nettoyage qui est peu coûteux et très compact notamment au regard d'un déploiement de ce dernier dans un réseau après-vente d'un constructeur automobile. De plus, l'invention préserve l'environnement lors du nettoyage du filtre à particules, car elle ne rejette que de l'air exempt de polluants.

Avantageusement, l'invention est particulièrement adaptée pour réaliser un nettoyage du filtre à particules 2 lorsqu'il est colmaté ou encore lorsqu'une régénération forcée de ce dernier ne permet pas de le remettre en état de marche.

La présente invention n'est pas limitée au mode de réalisation qui a été explicitement décrit, mais elle en inclut les diverses variantes et généralisations contenues dans le domaine des revendications ci-après. Par exemple, l'invention est applicable à tout type de pièce souillée par des suies ou des goudrons, qui résistent à une haute température et à la projection d'abrasifs. Elle peut aussi être adaptée à des éléments de la ligne d'admission d'un moteur à combustion interne, notamment les composants d'un circuit EGR (acronyme anglais signifiant en français recirculation des gaz d'échappement).

## Revendications

1. Procédé de nettoyage d'un filtre à particules (2) d'une ligne d'échappement d'un moteur thermique d'un véhicule automobile comprenant une étape de mise en circulation (28) d'un flux de fluides à une température (T1), notamment à une haute température, au travers du filtre à particules (2), le flux de fluide comprenant des particules abrasives.

2. Procédé selon la revendication précédente, **caractérisé en ce que** l'étape de mise en circulation (28) comprend une première étape de pyrolyse (29) de particules de suie comprises dans le filtre à particules (2) comportant une étape de configuration (30) de caractéristiques d'un premier fluide du flux de fluides relatives à un premier débit (D1) et à la température (T1).

3. Procédé selon l'une quelconque des revendications précédentes, **caractérisé en ce que** l'étape de mise en circulation (28) comprend une deuxième étape de pyrolyse (31) de particules de suie comprises dans le filtre à particules (2) et une étape de réalisation (32) du flux de fluides.

4. Procédé selon la revendication précédente, **caractérisé en ce que** :
- la deuxième étape de pyrolyse (31) comprend une étape de configuration (33) d'une caractéristique du premier fluide du flux de fluides relative à un deuxième débit (D2), et
- l'étape de réalisation (32) du flux de fluides comprend une étape d'obtention (34) d'un deuxième fluide et une étape d'injection (35) du deuxième fluide dans le premier fluide.

5. Procédé selon la revendication précédente, **caractérisé en ce que** l'étape d'obtention (34) du deuxième fluide comprend prévoit une réalisation d'un mélange de composants choisis parmi les composants suivants : un fluide liquide, au moins un additif et des particules abrasives.

6. Procédé selon l'une quelconque des revendications précédentes, **caractérisé en ce qu'**il comprend :
- une étape d'évacuation (37) des particules de suie, et/ou
- une étape d'extraction (36) des particules abrasives comprises dans le flux de fluides, et/ou
- une étape de refroidissement (38) du filtre à particules (2).

7. Procédé selon l'une quelconque des revendications précédentes, **caractérisé en ce qu'**un premier débit (D1) est inférieur à un deuxième débit (D2).

8. Procédé selon l'une quelconque des revendications précédentes, **caractérisé en ce qu'**il comprend une étape d'agencement (26) du filtre à particule (2) dans un dispositif de support (7) d'un système (1) de nettoyage du filtre à particules (2).

9. Système (1) de nettoyage d'un filtre à particules (2) d'une ligne d'échappement d'un véhicule automobile mettant en oeuvre le procédé de nettoyage selon l'une quelconque des revendications précédentes comprenant un dispositif de support (7) dans lequel est agencé ledit filtre à particules (2) ainsi que :
- une unité de traitement (3) ;
- un dispositif de soufflerie (4) ;
- un dispositif de chauffage (5), et
- un dispositif d'injection (6),
ladite unité de traitement (3) étant reliée audits dispositifs de soufflerie (4), de chauffage (5) et d'injection (6) de manière à réaliser une mise en circulation dans un circuit (20) du système (1) d'un flux de fluides au travers du filtre à particules (2), le flux ayant une haute température (T1) et comprenant des particules abrasives.

10. Système (1) selon la revendication précédente, **caractérisé en ce que** :
- le dispositif de soufflerie (4) comprend un élément de régulation (12) d'un débit (D1, D2) du premier fluide dans le circuit (20) contrôlé par l'unité de traitement (3), et/ou
- le dispositif de chauffage (5) comprend un élément de chauffage (13a) contrôlé par l'unité de traitement (3).
